# EUROPÄISCHE PATENTSCHRIFT

(11) **EP 1 517 120 B1**
(45) Veröffentlichungstag und Bekanntmachung des Hinweises auf die Patenterteilung: **02.08.2006**
(21) Anmeldenummer: 04018912.8
(22) Anmeldetag: 10.08.2004
(51) Int. Cl.: G01D 5/347, G01B 7/30, G01P 1/04

(54) **Drehgeber**
Shaft encoder
Capteur de rotation

(30) Priorität: 22.09.2003 DE 10343725
(43) Veröffentlichungstag der Anmeldung: 23.03.2005
(73) Patentinhaber: SICK STEGMANN GmbH, 78166 Donaueschingen (DE)
(72) Erfinder: Wehrle, Rolf, 78166 Donaueschingen (DE); Siraky, Josef, 78166 Donaueschingen (DE)
(74) Vertreter: Ludewigt, Christoph

(56) Entgegenhaltungen:
- EP-A- 0 682 229
- DE-A- 10 215 997

## Beschreibung

Die Erfindung betrifft einen Drehgeber gemäß dem Oberbegriff des Anspruchs 1.

Drehgeber dienen dazu, die Winkelposition eines drehbaren Teiles zu erfassen. Insbesondere werden Drehgeber als Sensor eingesetzt, der die Drehstellung einer Motorwelle für die Regelung eines Servoantriebs misst.

Der Drehgeber weist einen Geberkörper auf, in welchem eine Geberwelle drehbar gelagert ist. Die Geberwelle wird starr mit der zu messenden Welle gekuppelt, während der Geberkörper drehfest mit dem Motorgehäuse verbunden wird.

Um die Geberwelle mit der zu messenden Welle zu kuppeln, ist es aus der EP 0 682 229 A1 bekannt, in der Geberwelle eine Spannzange anzuordnen, die mittels einer Schraube in einen Innenkonus der Geberwelle gezogen wird, um die in die Spannzange eingesetzte zu messende Welle klemmend mit der Geberwelle zu verbinden. Dadurch ist eine einfache Montage des Drehgebers möglich, da dieser nur auf die zu messende Welle aufgesteckt und durch Anziehen der die Spannzange betätigenden Schraube geklemmt werden muss. Die klemmende Befestigung der Geberwelle auf der zu messenden Welle erfolgt dabei in dem einen axial eng begrenzten Bereich, in welchem der Außenkonus der Spannzange mit dem Innenkonus der Geberwelle zusammenwirkt. Diese Klemmung im Wesentlichen nur in einer Umfangslinie lässt unter Umständen minimale Fluchtungsabweichungen zwischen der Achse der zu messenden Welle und der Achse der Geberwelle zu. Solche Abweichungen können im ungünstigen Falle zu einer Unwucht und einem Schlagen der Geberwelle führen, die die Messgenauigkeit beeinträchtigen können.

Aus der DE 102 15 997 A1 ist ein Drehgeber bekannt, der eine hohle Geberwelle zur Aufnahme einer zu messenden Welle aufweist, wobei innerhalb der hohlen Geberwelle zwei Paare entgegengesetzter Kegelringe vorgesehen sind, die durch ein Abstandsstück voneinander getrennt und zwischen einem Sicherungsteil und einem beweglichen Puffer angeordnet sind. Die axial zusammengedrückten Kegelringe verformen sich in Radialrichtung und halten die zu messende Welle innerhalb der Geberwelle fest.

Der Erfindung liegt die Aufgabe zu Grunde, einen Drehgeber der eingangs genannten Gattung so zu verbessern, dass eine stabile Kupplung der Geberwelle auf der zu messenden Welle mit hoher axialer Fluchtungsgenauigkeit möglich ist.

Diese Aufgabe wird erfindungsgemäß gelöst durch einen Drehgeber mit den Merkmalen des Anspruchs 1.

Vorteilhafte Ausführungen der Erfindung sind in den abhängigen Ansprüchen angegeben.

Bei dem erfindungsgemäßen Drehgeber ist eine Spannzange vorgesehen, die die Form einer hohlen zylindrischen Hülse hat und an ihren beiden Enden jeweils einen Konus aufweist. Der vordere Außenkonus der Spannzange wirkt mit einem Innenkonus der Geberwelle zusammen, während der hintere Konus mit einem entsprechenden Konus einer Spannhülse zusammenwirkt. Diese Spannhülse ist axial in der Geberwelle verschiebbar und kann axial mit einer Spannkraft beaufschlagt werden. Durch das gleichzeitige Klemmen der zu messenden Welle an dem vorderen und dem hinteren Ende der Spannzange ist die Geberwelle auf der Motorwelle in zwei axial beabstandeten Bereichen befestigt, so dass eine exakte koaxiale Ausrichtung der Geberwelle auf der Motorwelle gewährleistet ist. Die Montage des Drehgebers auf der zu messenden Welle ist einfach möglich, indem der Drehgeber auf die zu messende Welle aufgesteckt und durch Anziehen nur einer einzigen Schraube auf dieser Welle geklemmt wird.

In einer einfachen Ausführung wird die Spannzange in der hohlen Geberwelle aufgenommen und stützt sich mit ihrem vorderen Ende an dem Innenkonus der Geberwelle ab. Auch die Spannhülse ist in der hohlen Geberwelle axial anschließend an die Spannzange aufgenommen. Auf das hintere Ende der Geberwelle ist ein Wellenkopf aufgesetzt, der ein koaxiales Innengewinde aufweist, in welches eine Spannschraube eingedreht wird. Mittels der Spannschraube wird die axiale Spannkraft auf die Spannhülse ausgeübt.

Die Spannzange kann als hohlzylindrische Hülse mit geschlossenem Mantel ausgebildet sein. Im Bereich der konischen Enden wird die Hülse beim Spannen elastisch verformt. Sind größere Spannkräfte erforderlich, so kann die Spannzange auch im Bereich der konischen Enden oder über die gesamte Länge axial geschlitzt sein, um größere Durchmesseränderungen für den Klemmvorgang zu ermöglichen. Der Konuswinkel der Konusse der Spannzange und der Konusse der Geberwelle und der Spannhülse sind so groß gewählt, dass keine Selbsthemmung der ineinander greifenden Konusse auftritt. Um den Drehgeber zu demontieren, muss daher nur die Spannschraube gelöst werden. Sobald die Spannschraube keinen axialen Druck auf die Spannhülse mehr ausübt, weitet sich die Spannzange unter axialer Verschiebung der Spannhülse elastisch auf, wodurch die Klemmung aufgehoben ist.

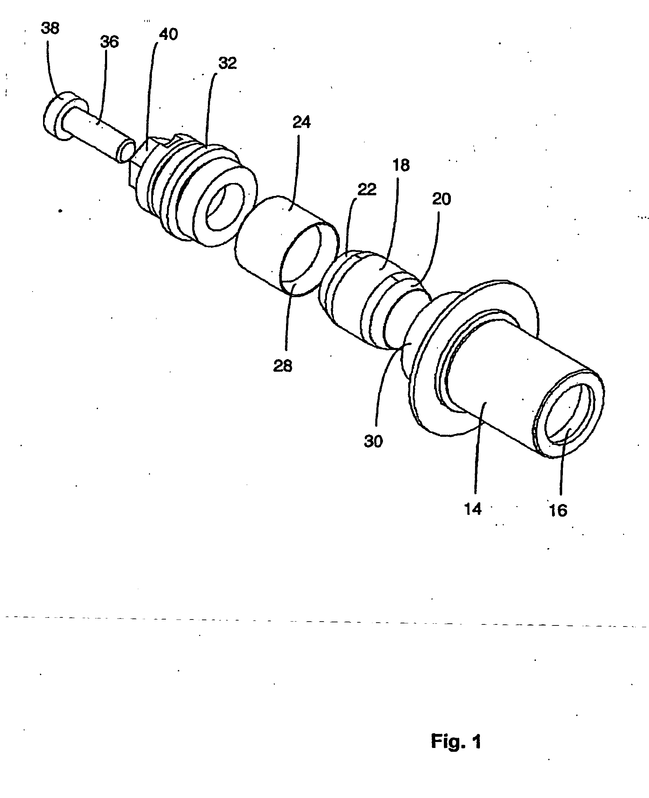

Im Folgenden wird die Erfindung anhand eines in der Zeichnung dargestellten Ausführungsbeispiels näher erläutert. Es zeigen
- Figur 1: in einer perspektivischen Explosionsdarstellung die Geberwelle mit der Spannzange und

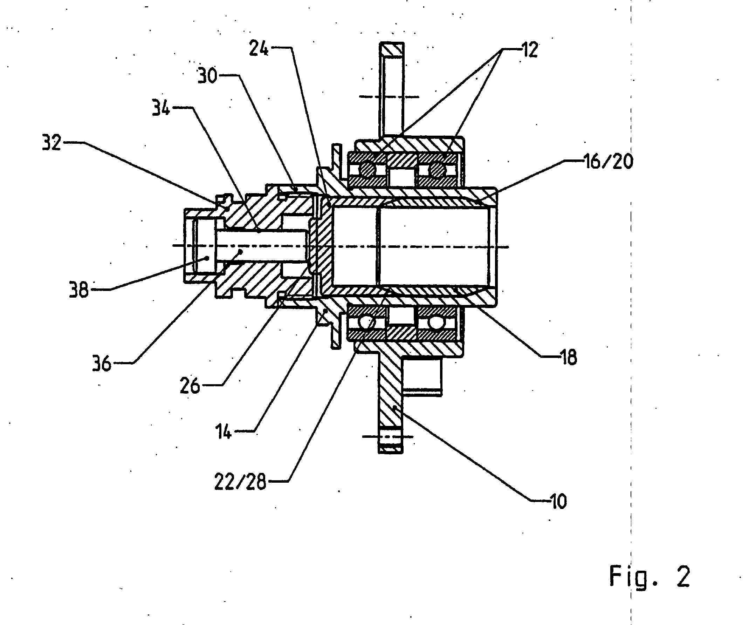

- Figur 2: einen Axialschnitt durch die erfindungswesentlichen Teile des Drehgebers.

Der Drehgeber dient z. B. als Sensor, der die Winkelposition der Welle eines Servomotors bestimmt und diese zur Regelung eines Stellantriebs rückmeldet.

Der Drehgeber weist einen Geberkörper 10 auf, in welchem mittels Wälzlagern 12 eine Geberwelle 14 drehbar gelagert ist. Die Geberwelle 14 wird in später beschriebener Weise mit der zu messenden Welle des Motors gekuppelt. Die Geberwelle 14 trägt eine in der Zeichnung nicht dargestellte Winkel-Maßverkörperung, z. B. eine Codescheibe mit einer inkrementalen oder absoluten Codierung. Der Geberkörper 10 trägt eine Abtasteinrichtung zur Abtastung der Codierung der Codescheibe sowie die Elektronik zur Versorgung der Abtasteinrichtung, zur Verarbeitung und zur Übertragung der Abtastsignale. Der Geberkörper 10 wird in nicht dargestellter Weise drehfest und vorzugsweise axial und radial federnd mit dem Gehäuse des Motors verbunden.

Diese in der Zeichnung nicht dargestellten und hier nicht näher beschriebenen Teile des Drehgebers können in an sich bekannter Weise ausgebildet sein. Da diese Teile zum Stand der Technik gehören und nicht Gegenstand der Erfindung sind, ist eine nähere Beschreibung nicht erforderlich.

Zur Befestigung der Geberwelle 14 auf der zu messenden Welle ist die Geberwelle 14 als hohlzylindrische Welle mit einer koaxial durchgehenden Innenbohrung ausgebildet. Die Innenbohrung weist einen durchgehend konstanten Durchmesser auf und ist lediglich an ihrem vorderen Ende, d. h. an dem dem Motor zugewandten, in der Zeichnung rechten Ende durch einen Innenkonus 16 verengt. Der Durchmesser der Innenbohrung der Geberwelle 14 an deren vorderem Ende, d. h. der kleine Durchmesser des Innenkonus 16 entspricht mit geringem radialem Spiel dem Außendurchmesser der zu messenden Welle.

In die Innenbohrung der Geberwelle 14 ist eine Spannzange 18 eingesetzt. Die Spannzange 18 hat die Form einer dünnwandigen hohlzylindrischen Hülse, deren Außendurchmesser mit geringem radialem Spiel dem Innendurchmesser der Innenbohrung der Geberwelle 14 entspricht. Der Innendurchmesser der Spannzange 18 entspricht wiederum mit geringem radialem Spiel dem Außendurchmesser der zu messenden Welle. Am vorderen, d. h. in der Zeichnung rechten Ende weist die Spannzange 18 einen vorderen Außenkonus 20 auf, der mit dem Innenkonus 16 der Geberwelle 14 zusammenwirkt. Am hinteren, in der Zeichnung linken Ende ist die Spannzange 18 mit einem hinteren Außenkonus 22 ausgebildet, der sich im Gegensatz zu dem vorderen Außenkonus 20 nach hinten axial verjüngt.

Axial hinter der Spannzange 18 ist in die Innenbohrung der Geberwelle 14 eine Spannhülse 24 eingesetzt. Der Außendurchmesser der Spannhülse 24 entspricht mit geringem radialem Spiel dem Innendurchmesser der Innenbohrung der Geberwelle 14. Die Spannhülse 24 hat die Form eines zylindrischen Topfes, der an seinem hinteren, d. h. in der Zeichnung linken Ende durch einen den gesamten Querschnitt überdeckenden Boden 26 geschlossen ist. Der nach vorne hin offene hohlzylindrische Innenraum der Spannhülse 24 weist einen Innendurchmesser auf, der im Wesentlichen mit dem Innendurchmesser der Spannzange 18 übereinstimmt, d. h. mit geringem radialem Spiel dem Außendurchmesser der zu messenden Welle entspricht. An dem axial vorderen Ende ist die Spannhülse 24 mit einem Innenkonus 28 ausgebildet, der mit dem hinteren Außenkonus 22 der Spannzange 18 zusammenwirkt. Die Spannhülse 24 ist axial frei verschiebbar in der Geberwelle 14.

An dem axial hinteren Ende der Geberwelle 14, d. h. an deren in der Zeichnung linkem Ende ist ein Zylinderstutzen 30 koaxial angeformt, der einen gegenüber der durchgehenden Innenbohrung erweiterten Innendurchmesser aufweist, in welchen ein Innengewinde eingeformt ist. In das Innengewinde des Zylinderstutzens 30 wird ein Wellenkopf 32 mit einem Außengewinde eingeschraubt. Die Schraubverbindung zwischen dem Wellenkopf 32 und dem Zylinderstutzen 30 wird vorzugsweise durch eine Klebung fixiert und abgedichtet. Der Wellenkopf 32 hat die Form eines Stopfens, der die Innenbohrung der Geberwelle 14 an deren hinterem Ende verschließt. Der Wellenkopf 32 wird axial mittig von einer Gewindebohrung 34 durchsetzt. In die Gewindebohrung 34 wird eine Spannschraube 36 eingedreht. Die Spannschraube 36 stützt sich mit ihrem inneren vorderen Ende axial an dem Boden 26 der Spannhülse 24 ab. An ihrem äußeren hinteren Ende weist die Spannschraube 36 einen Schraubenkopf 38 z. B. mit einem Innenmehrkant auf, der axial in den Wellenkopf 32 eintaucht. Am Außenumfang des Wellenkopfes 32 sind Angriffsflächen ausgebildet, vorzugsweise in Form eines Außenmehrkants 40.

Um den Drehgeber an einem Motor zu montieren, wird der Drehgeber mit seiner Geberwelle 14 auf die zu messende Welle des Motors aufgesteckt. Hierbei ist zunächst die Spannschraube 36 soweit nach außen zurückgedreht, dass diese keinen axialen Druck auf die Spannhülse 24 ausübt. Da der Innenkonus 16 der Geberwelle und der vordere Außenkonus 20 der Spannzange einerseits und der Innenkonus 28 der Spannhülse 24 und der hintere Außenkonus 22 der Spannzange 18 andererseits jeweils mit einem Konuswinkel ausgebildet sind, der keine Selbsthemmung bewirkt, entspannt sich die Spannzange 18 radial auf Grund ihrer Elastizität. Die Spannzange 18 schiebt sich dabei mit ihrem vorderen Außenkonus 20 an dem Innenkonus 16 axial nach hinten, während sie mit ihrem hinteren Außenkonus 22 über den Innenkonus 28 die Spannhülse 24 axial nach hinten schiebt. Nun kann beim Aufstecken des Drehgebers die zu messende Welle des Motors axial in die Spannzange 18 und die Spannhülse 24 eingeschoben werden.

Anschließend wird die Spannschraube 36 eingedreht, wobei der Wellenkopf 32 und die mit diesem festverbundene Geberwelle 14 mittels des Außenmehrkants 40 festgehalten werden. Wenn die Spannschraube 36 eingedreht wird, drückt sie mit ihrem inneren Ende axial gegen den Boden 26 der Spannhülse 24 und schiebt diese axial nach vorne. Die Spannhülse 24 schiebt dadurch die Spannzange 18 ebenfalls in der Innenbohrung der Geberwelle 14 nach vorn. Dadurch wirkt der vordere Außenkonus 20 der Spannzange 18 mit dem Innenkonus 16 der Geberwelle 14 einerseits und der Innenkonus 28 der Spannhülse 24 mit dem hinteren Außenkonus 22 der Spannzange 18 andererseits zusammen. Bei dem weiteren Eindrehen der Spannschraube 36 übt diese eine axiale Spannkraft auf die Spannhülse 24 aus, wodurch die Klemmbefestigung der Geberwelle 14 auf der zu messenden Welle bewirkt wird. Dabei ergibt sich eine Klemmung mit hoher radialer Klemmkraft zwischen der Geberwelle 14 und der eingesteckten zu messenden Welle zum einen im Bereich des Innenkonus 16 und des vorderen Außenkonus 20 der Spannzange 18 und zum anderen im Bereich des hinteren Außenkonus 22 der Spannzange 18 und des Innenkonus 28 der Spannhülse 24.

Soll der Drehgeber wieder demontiert werden, so muss nur die Spannschraube 36 wieder entsprechend zurückgedreht und gelöst werden. Sobald die durch die Spannschraube 36 bewirkte axiale Spannkraft wegfällt, kann sich die Spannzange 18 auf Grund ihrer Eigenelastizität wieder radial aufweiten, wobei sie sich einerseits an dem Innenkonus 16 geringfügig axial nach hinten bewegt und andererseits die Spannhülse 24 über deren Innenkonus 28 geringfügig axial nach hinten schiebt. Dadurch hat die Spannzange 18 ausreichend radiales Spiel auf der zu messenden Welle, so dass die Geberwelle 14 und damit der gesamte Drehgeber von der zu messenden Welle abgezogen werden kann.

## Patentansprüche

1. Drehgeber mit einem Geberkörper (16), mit einer in dem Geberkörper drehbar gelagerten Geberwelle (14) und mit einer in der hohlen Geberwelle angeordneten Spannzange (18) zur klemmenden Kupplung der Geberwelle auf einer zu messenden Welle, **dadurch gekennzeichnet, dass** die Spannzange (18) die Form einer hohlzylindrischen Hülse hat, die an ihrem vorderen und hinteren Ende jeweils einen Konus (20 bzw. 22) aufweist, dass die Geberwelle (14) einen mit dem vorderen als Außenkonus (20) ausgebildeten Konus der Spannzange (18) zusammenwirkenden Innenkonus (16) aufweist und dass in der Geberwelle (14) eine Spannhülse (24) axial verschiebbar angeordnet ist, die einen mit dem hinteren Konus (22) der Spannzange (18) zusammenwirkenden Konus (28) aufweist und mit einer axialen Spannkraft beaufschlagbar ist.

2. Drehgeber nach Anspruch 1, **dadurch gekennzeichnet, dass** die Geberwelle (14) eine koaxiale Innenbohrung aufweist, an deren vorderem Ende der Innenkonus (16) ausgebildet ist und in der die Spannzange (18) und die Spannhülse (24) axial verschiebbar aufgenommen sind.

3. Drehgeber nach Anspruch 1 oder 2, **dadurch gekennzeichnet, dass** auf das hintere Ende der Geberwelle (14) ein Wellen kopf (32) aufgesetzt ist, der die Innenbohrung der Geberwelle (14) verschließt, und dass in den Wellenkopf (32) koaxial eine Spannschraube (36) einschraubbar ist, die die Spannhülse (24) mit der axialen Spannkraft beaufschlagt.

4. Drehgeber nach Anspruch 3, **dadurch gekennzeichnet, dass** die Spannhülse (24) die Form eines zylindrischen Topfes mit einem geschlossenen Boden (26) aufweist und dass sich die Spannschraube (36) axial an diesem Boden (26) abstützt.

5. Drehgeber nach einem der vorhergehenden Ansprüche, **dadurch gekennzeichnet, dass** der Innenkonus (16) der Geberwelle (14) und der vordere Außenkonus (20) der Spannzange (18) einerseits und der hintere Außenkonus (22) der Spannzange (18) und der Innenkonus (28) der Spannhülse (24) andererseits jeweils mit einem Konuswinkel ausgebildet sind, der keine Selbsthemmung bewirkt.

6. Drehgeber nach einem der Ansprüche 1 bis 5, **dadurch gekennzeichnet, dass** die Spannzange (18) einen geschlossenen Mantel aufweist und zumindest im Bereich ihrer Außenkonusse (20, 22) radial elastisch komprimierbar ist.

7. Drehgeber nach einem der Ansprüche 1 bis 5, **dadurch gekennzeichnet, dass** die Spannzange (18) zumindest im Bereich ihrer Außenkonusse (20, 22) axial geschlitzt ist.

## Claims

1. Rotary encoder having an encoder body (16), having an encoder shaft (14) which is mounted in the encoder body such that it can rotate, and having a collet (18) arranged in the hollow encoder shaft for clamping coupling of the encoder shaft on a shaft to be measured, **characterized in that** the collet (18) is in the form of a hollow-cylindrical sleeve which has a cone (20 and 22, respectively) at both its front and rear ends, **in that** the encoder shaft (14) has an inner cone (16), which interacts with the front cone which is in the form of an outer cone (20) of the collet (18), and **in that** a clamping sleeve (24) is arranged in the encoder shaft (14) such that it can move axially, has a cone (28) which interacts with the rear cone (22) of the collet (18), and can have an axial clamping force applied to it.

2. Rotary encoder according to Claim 1, **characterized in that** the encoder shaft (14) has a coaxial internal hole at whose front end the inner cone (16) is formed, and in which the collet (18) and the clamping sleeve (24) are held such that they can move axially.

3. Rotary encoder according to Claim 1 or 2, **characterized in that** a shaft head (32) is fitted to the rear end of the encoder shaft (14) and closes the internal hole in the encoder shaft (14) and **in that** a clamping screw (36) can be screwed coaxially into the shaft head (32) and applies the axial clamping force to the clamping sleeve (24).

4. Rotary encoder according to Claim 3, **characterized in that** the clamping sleeve (24) is in the form of a cylindrical pot with a closed base (26), and **in that** the clamping screw (36) is supported axially on this base (26).

5. Rotary encoder according to one of the preceding claims, **characterized in that** the inner cone (16) of the encoder shaft (14) and the front outer cone (20) of the collet (18) on the one hand and the rear outer cone (22) of the collet (18) and the inner cone (28) of the clamping sleeve (24) on the other hand are each formed with a cone angle which results in no self-locking.

6. Rotary encoder according to one of Claims 1 to 5, **characterized in that** the collet (18) has a closed casing and can be compressed radially elastically at least in the area of its outer cones (20, 22).

7. Rotary encoder according to one of Claims 1 to 5, **characterized in that** the collet (18) is axially slotted, at least in the area of its outer cones (20, 22).

## Revendications

1. Capteur de rotation comprenant un corps (10) de capteur, un arbre (14) monté à rotation dans ledit corps du capteur, et une pince de serrage (18) logée dans l'arbre creux du capteur en vue du couplage, par coincement, dudit arbre du capteur sur un arbre à mesurer, **caractérisé par le fait que** la pince de serrage (18) revêt la forme d'une douille cylindrique creuse munie d'un cône respectif (20, ou 22) à ses extrémités antérieure et postérieure ; **par le fait que** l'arbre (14) du capteur présente un cône intérieur (16) coopérant avec le cône antérieur de ladite pince de serrage (18), réalisé en tant que cône extérieur (20) ; et **par le fait que** l'arbre (14) dudit capteur renferme, avec faculté de coulissement axial, une douille de serrage (24) qui comporte un cône (28) coopérant avec le cône postérieur (22) de la pince de serrage (18), et peut être sollicitée par une force de serrage axiale.

2. Capteur de rotation selon la revendication 1, **caractérisé par le fait que** l'arbre (14) dudit capteur comporte un alésage intérieur coaxial à l'extrémité antérieure duquel le cône intérieur (16) est façonné, et dans lequel la pince de serrage (18) et la douille de serrage (24) sont logées à coulissement axial.

3. Capteur de rotation selon la revendication 1 ou 2, **caractérisé par le fait qu'**une tête (32) d'arbre, mise en place sur l'extrémité postérieure de l'arbre (14) dudit capteur, obture l'alésage intérieur dudit arbre (14) ; et **par le fait qu'**une vis de serrage (36), pouvant être vissée coaxialement dans la tête (32) de l'arbre, sollicite la douille de serrage (24) par la force de serrage axiale.

4. Capteur de rotation selon la revendication 3, **caractérisé par le fait que** la douille de serrage (24) revêt la forme d'une cuvette cylindrique munie d'un fond fermé (26) ; et **par le fait que** la vis de serrage (36) prend appui axialement contre ce fond (26).

5. Capteur de rotation selon l'une des revendications précédentes, **caractérisé par le fait que**, d'une part le cône intérieur (16) de l'arbre (14) dudit capteur et le cône extérieur antérieur (20) de la pince de serrage (18) et, d'autre part, le cône extérieur postérieur (22) de ladite pince de serrage (18) et le cône intérieur (28) de la douille de serrage (24), sont respectivement réalisés avec un angle de conicité ne provoquant aucun autoblocage.

6. Capteur de rotation selon l'une des revendications 1 à 5, **caractérisé par le fait que** la pince de serrage (18) possède une enveloppe fermée et peut être comprimée élastiquement, dans le sens radial, au moins dans la région de ses cônes extérieurs (20, 22).

7. Capteur de rotation selon l'une des revendications 1 à 5, **caractérisé par le fait que** la pince de serrage (18) est fendue axialement, au moins dans la région de ses cônes extérieurs (20, 22).
